# EUROPÄISCHE PATENTANMELDUNG

(11) **EP 2 628 585 A1**
(43) Veröffentlichungstag der Anmeldung: **21.08.2013**
(21) Anmeldenummer: 13152726.9
(22) Anmeldetag: 25.01.2013
(51) Int. Cl.: B29C 67/00, B22F 3/105

(54) **Verfahren zum Aufschmelzen/Sintern von Pulverpartikeln zur schichtweisen Herstellung von dreidimensionalen Objekten**

(30) Priorität: 17.02.2012 DE 102012202487
(71) Anmelder: Evonik Industries AG, 45128 Essen (DE)
(72) Erfinder: Grebe, Maik, 44805 Bochum (DE); Diekmann, Wolfgang, 45731 Waltrop (DE); Hessel-Geldmann, Sigrid, 45721 Haltern am See (DE); Kreutz, Juergen, 45772 Marl (DE)

(57) **Zusammenfassung**

Die vorliegende Erfindung betrifft ein Verfahren zum Aufschmelzen/Sintern von Pulverpartikeln zur schichtweisen Herstellung von dreidimensionalen Objekten.

## Beschreibung

Die vorliegende Erfindung betrifft ein Verfahren zum Aufschmelzen/Sintern von Pulverpartikeln zur schichtweisen Herstellung von dreidimensionalen Objekten.

Die zügige Bereitstellung von Prototypen ist eine in der jüngsten Zeit häufig gestellte Aufgabe. Verfahren, die dies ermöglichen, werden Rapid Prototyping/ Rapid Manufacturing oder auch Additive Fabrication- Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da die die aufgeschmolzenen Bereiche umgebende Baufeldebene ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6136948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, lonomere und Polyamid.

Das Koordinatensystem solch einer Vorrichtung wird üblicherweise dabei so definiert, dass die x-Koordinate in der Baufeldebene parallel zum Verfahrweg der Pulverauftragsvorrichtung verläuft. Die y-Koordinate liegt in der Baufeldebene senkrecht zum Verfahrweg der Pulverauftragsvorrichtung. Die z-Koordinate steht senkrecht zur Baufeldebene.

Die selektiv zu verfestigende Fläche wird dabei in den bekannten Verfahren und Vorrichtungen in Form von geraden Strecken Zeile für Zeile (x-Richtung) oder Spalte für Spalte (y-Richtung) mit einem Strahl elektromagnetischer Strahlung (kurz: Energiestrahl) abgefahren. Aus DE 10233389 A1 ist zudem ein gerader Verlauf in bestimmten Winkeln innerhalb der x,y-Ebene bekannt.

Diese Belichtungslinien in Form von geraden, parallel verlaufenden Strecken werden dabei durch die Außenkante der zu verfestigenden Fläche begrenzt. Der Abstand zwischen den Zeilen bzw. Spalten ist einstellbar. Der Energiestrahl wird üblicherweise derart gestaltet, dass der Fokus des Energiestrahls möglichst in der Baufeldebene liegt. Zur Verbesserung der Oberfläche des herzustellenden Objekts wird oft zusätzlich die Kontur der zu verfestigenden Fläche mit dem Energiestrahl abgefahren. Die Zeit, die für das Abfahren des Bereichs mit dem Energiestrahl benötigt wird, wird hauptsächlich durch die Verfahrgeschwindigkeit des Energiestrahls und den Abstand zwischen den einzelnen Zeilen bzw. Spalten bestimmt. Zur Beschleunigung des Prozesses ist es daher naheliegend, die Verfahrgeschwindigkeit des Energiestrahls und/oder den Abstand zwischen den Zeilen bzw. Spalten zu erhöhen. Die Verfahrgeschwindigkeit des Energiestrahls kann nicht beliebig erhöht werden, da bei zu starken Beschleunigungen bzw. Verzögerungen die Spiegel des Scannersystems nicht mehr präzise positioniert werden können. Die hergestellten Objekte weisen in diesem Falle Unebenheiten an den Rändern auf. Auch der Abstand zwischen den Belichtungslinien kann nicht beliebig erhöht werden, da ab einem bestimmten Abstand die Anbindung zwischen den einzelnen Belichtungslinien nur noch unzureichend ist. In diesem Falle verschlechterten sich die mechanischen Kennwerte der hergestellten Objekte.

Aufgabe der vorliegenden Erfindung ist die Bereitstellung eines verbesserten Verfahrens zur Herstellung dreidimensionaler Objekte, mit dem sich die Zeit, die für das Abfahren des zu verfestigenden Bereichs mit dem Energiestrahl benötigt wird, reduzieren lässt, ohne Abstriche bezüglich der Qualität der hergestellten Objekte hinnehmen zu müssen.

Gegenstand der vorliegenden Erfindung ist ein Verfahren zur schichtweisen Herstellung von dreidimensionalen Objekten (Formkörpern) in einer Vorrichtung umfassend einen Bauraum (10) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und einem im Strahlengang der elektromagnetischen Strahlung befindlichen Linsensystem (8), wobei die Schicht eines durch Einwirkung elektromagnetischer Strahlung verfestigbaren Materials nichtlinear, das heißt in nicht geraden Linien (Belichtungs- oder Abtastlinien), von der elektromagnetischen Strahlung abgefahren wird. Hierbei verlaufen die Linien somit nicht parallel.

Überraschend wird gefunden, dass die Zeit für das Abfahren der zu verfestigenden Fläche mit dem Strahl der elektromagnetischen Strahlungsquelle beschleunigt werden kann, wenn der Energiestrahl die zu verfestigende Fläche nichtlinear (nicht parallel) abfährt, das heißt die Belichtungslinien so gewählt werden, dass diese nichtlinear sind. Das nichtlineare Abfahren der elektromagnetischen Strahlung wird vorzugsweise mittels eines beweglich gelagerten optisch wirksamen Elements (19) realisiert.

Unter Belichtungslinien im Sinne der vorliegenden Erfindung werden die durch den Strahl der elektromagnetischen Strahlung abgefahrenen Bereiche in der Baufeldebene (4) verstanden.

Zur Durchführung des erfindungsgemäßen Verfahrens wird in der Regel in einem Bauraum (10) eine höheneinstellbare Bauplattform (6) abgesenkt und mit einer Vorrichtung (7) eine Schicht eines durch Einwirkung elektromagnetischer Strahlung verfestigbaren Materials auf die Bauplattform (6) aufgetragen. Nach Erwärmung dieses Materials wird das Material mittels einer elektromagnetische Strahlung emittierenden Strahlungsquelle (1) an den gewünschten Stellen selektiv geschmolzen bzw. gesintert. Mittels einer Steuerungseinheit (3) und einer im Strahlengang der elektromagnetischen Strahlung befindliche Linse (8) wird der Fokus der elektromagnetischen Strahlung an die entsprechenden Stellen in der Baufeldebene (4) gelenkt.

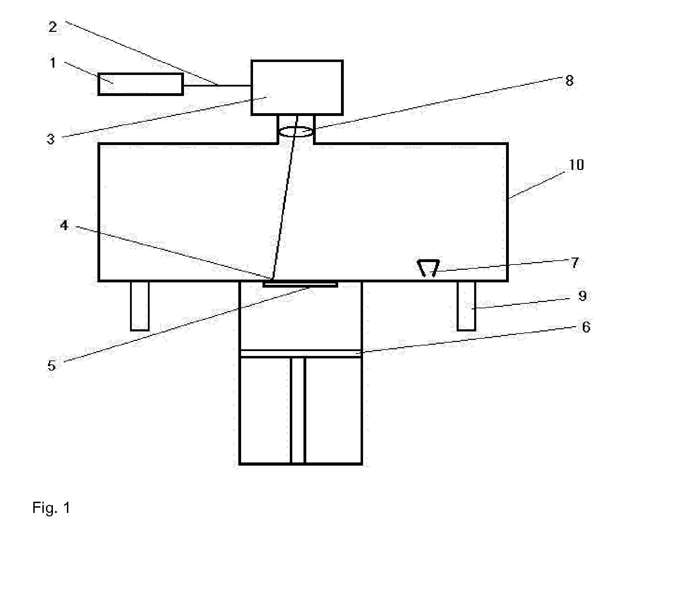

Fig. 1 zeigt den prinzipiellen Aufbau einer Vorrichtung zur Herstellung von dreidimensionalen Objekten. Das Bauteil wird zentral im Baufeld positioniert. Aus einem Laser (1) wird der Laserstrahl (2) mittels eines Scansystems (3) durch die Linse (8) auf eine temperierte und inertisierte, vorzugsweise mit Stickstoff inertisierte, Pulveroberfläche (4) des zu bildenden Objekts (5) gelenkt. Die Linse hat dabei die Aufgabe, die restlichen optischen Komponenten wie z. B die Spiegel des Scanners von der Bauraumatmosphäre zu trennen. Oft wird die Linse als F-Theta Linsensystem ausgeführt, um einen möglichst homogenen Fokus über dem gesamten Arbeitsfeld zu gewährleisten. Innerhalb des Bauraums befindet sich die Aufbringvorrichtung (7) zum Aufbringen des zu verfestigenden Materials auf die Bauplattform (6).

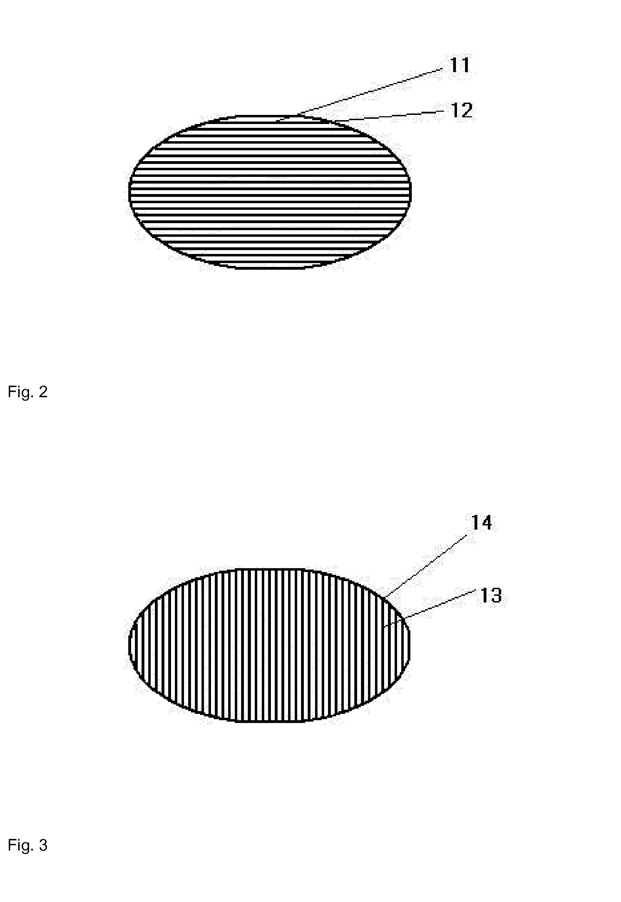

In Fig. 2 und 3 ist das Verfahren zum Abfahren der zu verfestigenden Fläche gemäß dem Stand der Technik dargestellt. Der Strahl der elektromagnetischen Strahlung wird derart gesteuert, dass die Belichtungslinien gerade Strecken sind, die durch den Rand der zu verfestigenden Fläche (12, 14) begrenzt werden. In Summe wird der Strahl der elektromagnetischen Strahlung linear in einer Bewegungsrichtung über die zu bestrahlende Oberfläche geführt, das heißt die Bewegung weist nur eine Bewegungskomponente in der Bewegungsebene auf. Die Belichtungslinien verlaufen entweder in x-Richtung (11) oder in y-Richtung (13). Oft wird die Orientierung der Belichtungslinien von Schicht zu Schicht alternierend geändert, das heißt zunächst wird eine Schicht in x-Richtung abgefahren, die darauffolgende Schicht dann in y-Richtung.

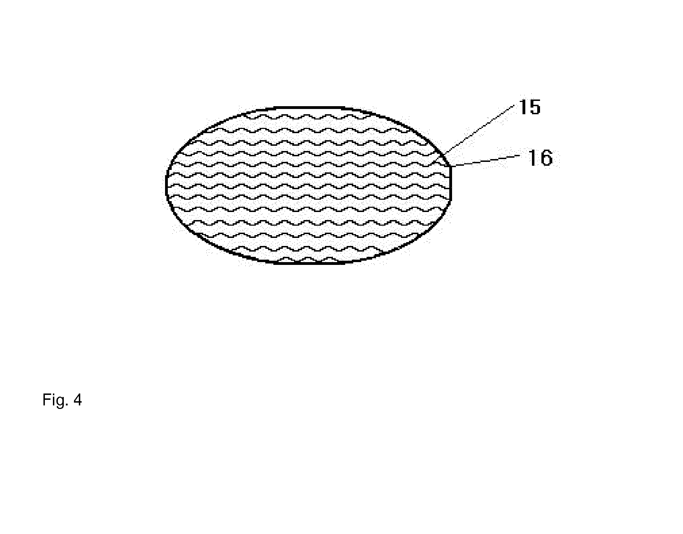

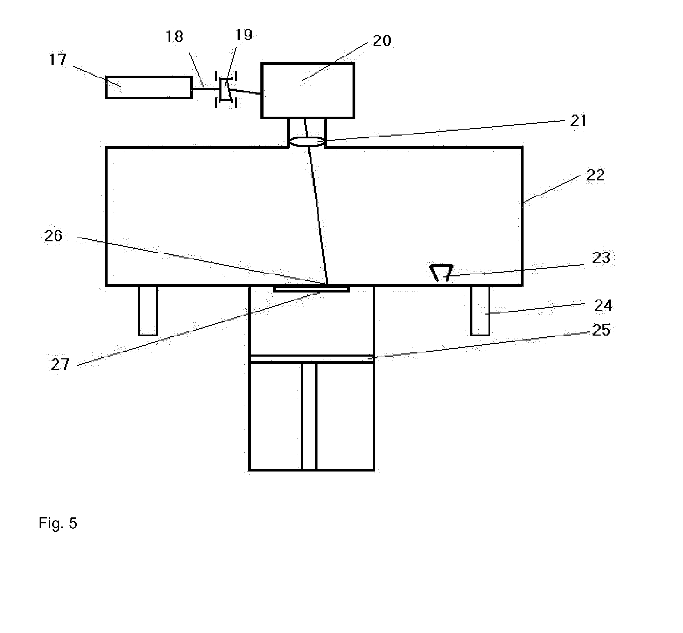

In Fig. 4 ist beispielhaft das erfindungsgemäße Verfahren zum Abfahren der zu verfestigenden Fläche dargestellt. Der Strahl der elektromagnetischen Strahlung wird derart gesteuert, dass die Belichtungslinien auf der Baufeldebene, die vom Rand (16) der zu verfestigenden Fläche begrenzt sind, nichtlinear sind (15). Somit wird die zu bestrahlende Oberfläche in Form einer Bewegung mit zwei Bewegungskomponenten in der Bewegungsebene von der elektromagnetischen Strahlung abgefahren, das heißt der Strahl wird sowohl in x-Richtung als auch y-Richtung, bezogen auf die Baufeldebene, unter fortlaufender Änderung des Winkels in der x,y-Ebene bewegt.

Die nicht geraden Linien können die Form einer Spline n-ten Grades haben. Ein Spline n-ten Grades ist eine Funktion, die stückweise aus Polynomen höchstens n-ten Grades zusammengesetzt ist. Bevorzugt haben die Belichtungslinien die Form einer periodischen Schwingung, wobei im Rahmen der vorliegenden Erfindung alle Formen einer Schwingung wie beispielsweise Rechteck-, Sinus- oder Dreieck-Schwingung oder Mischformen hieraus als periodische Schwingungen verstanden werden.

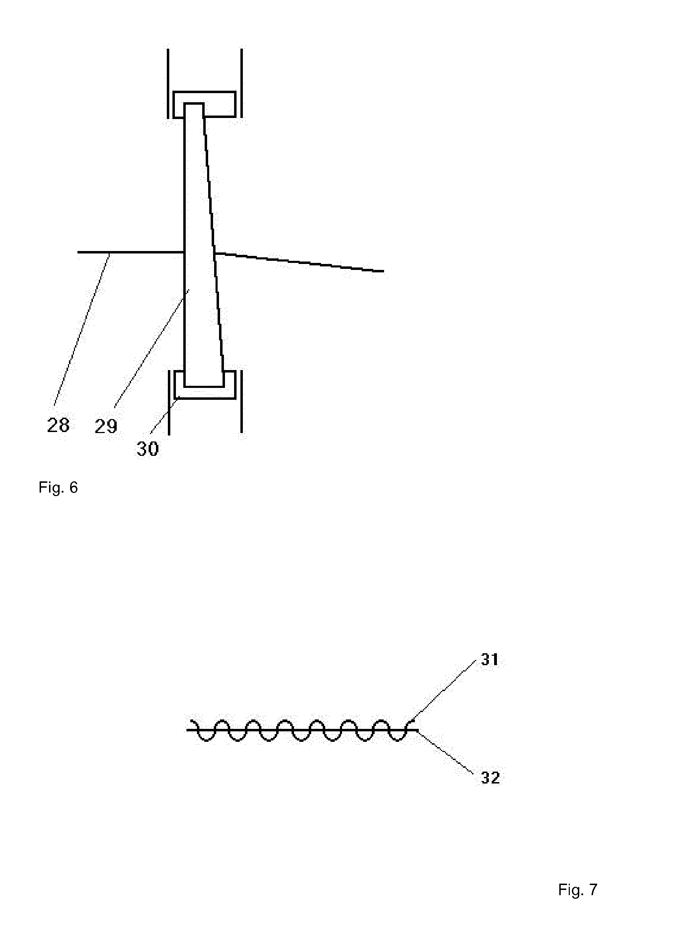

In Fig. 7 ist solch eine nichtlineare Belichtungslinie dargestellt. Die Belichtungslinie (31) schwingt um die gedachte Strecke (32), welche durch den Rand der zu verfestigenden Fläche definiert ist. Es resultiert eine Bewegung mit einer Bewegungskomponente in der Vorschubrichtung, die insbesondere linear sein kann, und einer zweiten Bewegungskomponente, senkrecht zu der ersten Bewegungskomponente.

Bevorzugt schwingt der Strahl der elektromagnetischen Strahlung um die gedachte Strecke, das heißt die Bewegungskomponente in der Vorschubrichtung, mit einer Amplitude von wenigstens 20 % und maximal 500 % des Abstandes der gedachten Strecken. Besonders bevorzugt schwingt der Strahl der elektromagnetischen Strahlung um die gedachte Strecke mit einer Amplitude von wenigstens 40 % und maximal 400 % des Abstandes der gedachten Strecken. Ganz besonders bevorzugt schwingt der Strahl der elektromagnetischen Strahlung um die gedachte Strecke mit einer Amplitude von wenigstens 50 % und maximal 300 % des Abstandes der gedachten Strecken. Die Frequenz der Schwingung des Strahls der elektromagnetischen Strahlung beträgt mindestens 20 Hz. Bevorzugt beträgt die Frequenz der Schwingung des Strahl der elektromagnetischen Strahlung mindestens 50 Hz. Besonders bevorzugt beträgt die Frequenz der Schwingung des Strahls der elektromagnetischen Strahlung mindestens 100 Hz.

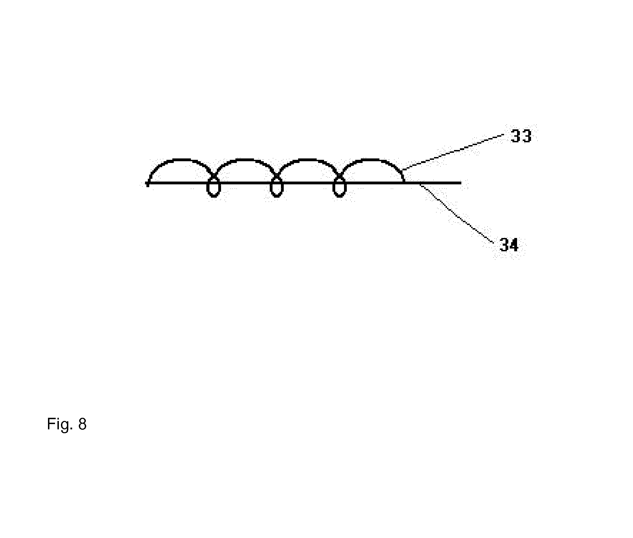

In einer weiteren bevorzugten Ausführungsform kann die Schicht eines durch Einwirkung elektromagnetischer Strahlung verfestigbaren Materials in Form einer Überlagerung von einer Rotationsbewegung mit einer Traslationsbewegung von der elektromagnetischen Strahlung abgefahren werden. Die Belichtungslinie resultiert somit aus einer Bewegung mit einer Bewegungskomponente in und entgegen der Vorschubrichtung, die insbesondere linear sein kann, und einer zweiten Bewegungskomponente, senkrecht zu der ersten Bewegungskomponente. Fig. 8 zeigt ein Beispiel der genannten Ausführungsform. Die Belichtungslinie (33) führt in diesem Fall in Form einer Zykloiden um die gedachte Strecke (34). Eine Zykloide, auch zyklische Kurve, Rad- oder Rollkurve genannt, ist die Bahn, die ein Kreispunkt beim Abrollen eines Kreises auf einer Leitkurve, zum Beispiel einer Geraden, beschreibt. Die Belichtungslinie kann wie eine gewöhnliche, eine verkürzte oder eine verlängerte Zykloide ausgeführt werden. Eine gewöhnliche Zykloide entsteht, wenn ein Kreis auf einer Geraden abrollt. Eine verkürzte Zykloide entsteht, wenn die Bahn eines Punktes im Inneren des Kreises betrachtet wird. Eine verlängerte Zykloide setzt dagegen voraus, dass ein Punkt außerhalb des abrollenden Kreises sich mit dem Kreis mitbewegt. Die bei der Beschreibung periodischer Schwingungen genannten Vorzugsbereiche gelten analog hier entsprechend.

In einer weiteren bevorzugten Ausführungsform des erfindungsgemäßen Verfahrens werden die Parameter hinsichtlich Amplitude und Frequenz der Belichtungslinie der abzufahrenden Fläche angepasst. So ist beispielsweise denkbar, die nichtlinearen Belichtungslinien zueinander zu versetzen, um besondere mechanische Eigenschaften des Bauteils zu erreichen.

Ein weiterer Gegenstand der vorliegenden Erfindung ist eine Vorrichtung zur schichtweisen Herstellung von dreidimensionalen Objekten umfassend einen Bauraum (22) mit einer höheneinstellbaren Bauplattform (25), einer Vorrichtung (23) zum Aufbringen einer Schicht eines durch Einwirkung elektromagnetischer Strahlung verfestigbaren Materials auf die Bauplattform (25), einer Bestrahlungseinrichtung umfassend eine elektromagnetische Strahlung emittierende Strahlungsquelle (17), eine Steuerungseinheit (20) und eine im Strahlengang der elektromagnetischen Strahlung befindliche Linse/Linsensystem (21), zum Bestrahlen von dem Objekt (26) entsprechenden Stellen der Schicht. Im Strahlengang befindet sich zudem ein beweglich gelagertes optisch wirksames Element (19), welches die elektromagnetische Strahlung ablenken kann.

Bei dem beweglich gelagerten optisch wirksamen Element (19), welches die elektromagnetische Strahlung ablenken kann, kann es sich um alle dem Fachmann bekannten Anordnungen von Spiegeln und Ablenkeinheiten handeln, insbesondere handelt es sich um Keilprismen. Keilprismen werden allgemein zur Ablenkung von Laser-Strahlen eingesetzt. Verschiedene Keilprismen stehen für verschiedene Ablenk-Winkel zur Auswahl und können bei Bedarf auch kombiniert werden. Insbesondere durch Rotation kann der Strahl so abgelenkt werden, dass der Strahl bei einer Umdrehung des Keilprismas einen Kreis beschreibt. Bei entsprechend hohen Drehzahlen des Keilprismas sind so sehr schnelle kreisförmige Ablenkungen des Strahls möglich. Dies ist im Rahmen der vorliegenden Erfindung für die nichtlineare Fahrweise besonders vorteilhaft.

Die Positionierung und Orientierung des optisch wirksamen Elements, insbesondere der Keilprismen, kann gesteuert werden. In Fig. (6) ist beispielhaft eine Ausführungsform dargestellt. Der Energiestrahl (28) wird mittels des beweglich gelagerten optisch wirksamen Elements (29), in diesem Falle ein Keilprisma, abgelenkt. Das Keilprisma rotiert um die rotationssymmetrische Achse. Die Lagerung (30) des Keilprismas ist so gestaltet, dass das Keilprisma entsprechend der gewünschten Ablenkung bewegt werden kann. Die Kombination von mehreren optisch wirksamen Elementen ist möglich. Es ist ebenfalls möglich, je nach benötigter Ablenkung, die benötigten optisch wirksamen Elemente in den Strahlengang bzw. aus dem Strahlengang zu schwenken. Bevorzugt beträgt die Ablenkung des elektromagnetischen Strahls weniger als 10°. Besonders bevorzugt beträgt die Ablenkung weniger als 5°. Ganz besonders bevorzugt beträgt die Ablenkung weniger als 1 °.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Besonders bevorzugt umfasst das Polymerpulver mindestens ein Polyamid oder Polyetherketone, wie PA6. PA66, PA610, PA613, PA1010, PA106, PA11, PA12, PA1012, PA1013 oder Mischungen aus diesen, insbesondere Polyamid 12, Polyamid 6, Polyamid 6.6 oder PEEK, wobei die genannten Polyamide besonders bevorzugt sind.

Darüber hinaus sind metallische Pulver, die beispielsweise Eisen, Titan oder Aluminium enthalten oder daraus bestehen, oder keramische Pulver geeignet. Vorzugsweise werden Polymerpulver eingesetzt.

Im Betrieb werden zunächst in der Regel in einem Rechner aufgrund eines Konstruktionsprogramms oder dergleichen Daten über die Form des herzustellenden Objekts (5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Beispielsweise mittels einer Aufbringvorrichtung (7) wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, insbesondere bevorzugt 140 °C bis 160 °C, erwärmt. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (5) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

Die mit den erfindungsgemäßen Verfahren hergestellten dreidimensionalen Objekte sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Die Beispiele werden, wenn nicht anders angegeben, der folgenden Beschreibung entsprechend bearbeitet. Die Baukammer (10) wird innerhalb von 120 min auf Prozesstemperatur gebracht. Die Temperatur in der Mitte der Baufeldebene wird als Bauraum-/Prozesstemperatur definiert. Vor der ersten Belichtung werden 40 Schichten Pulver aufgetragen. Aus einem Laser (1) wird der Laserstrahl (2) mittels eines Scannsystems (3) durch die Linse (8) auf eine temperierte und inertisierte (N₂) Baufeldebene (4) gelenkt.

Das zu belichtende Bauteil wird zentral im Baufeld positioniert. Eine rechteckige Fläche (5) mit den Abmaßen 170mm x 60 mm wird mittels des Lasers geschmolzen bzw. versintert. Danach wird die Bauplattform (6) um 0,15 mm abgesenkt und mittels einer Aufbringvorrichtung (7) eine neue Pulverschicht mit einer Geschwindigkeit von 100 mm/s aufgetragen. Diese Schritte werden wiederholt bis ein dreidimensionales Bauteil mit einer Höhe von 4 mm entsteht. Die zu belichtende Fläche wird dabei vom Laser von Schicht zu Schicht alternierend in x- oder y-Richtung abgefahren. Die für das Abfahren der rechteckigen Fläche mit dem Laserstrahl notwendige Zeit wird dabei erfasst. Nach Abschluss der Belichtung werden noch 40 weitere Schichten aufgetragen, bevor die Heizelemente der SLS-Maschine ausgeschaltet und die Abkühlphase eingeleitet wird.

Nach einer Abkühlzeit von mindestens 12 Stunden wird das Bauteil entnommen und vom anhaftenden Pulver befreit. Das Bauteil wird dann in 6 rechteckige Bauteile mit einer Größe von jeweils 170 mm x 10 mm x 4 mm geschnitten. Die mechanischen Kennwerte diese Bauteile werden gemäß DIN EN ISO 527 an einer Zwick Z020 (Prüfgeschwindigkeit 50 mm/min, Prüfgeschwindigkeit E-Modul 1 mm/min, Einspannlänge bei Startposition 115 mm, Messlänge Standardweg 50 mm, Beginn E-Modulermittlung 0,05 %, Ende E-Modulermittlung 0,25 %) ermittelt.

Die Versuchsanordnung wird so gestaltet, dass der Fokusdurchmesser auf der Höhe der Baufeldebene und der Mitte des Baufeldes 0,4 mm beträgt. Der Fokus des Laserstrahls wird in der Mitte des Baufeldes mit dem FocusMonitor von der PRIMES GmbH nach ISO 11146 (Methode 2. Moment) vermessen. Die Laserleistung wird nach ISO 11554 mit dem LM-1000 von der Coherent Deutschland GmbH gemessen, wobei die durchschnittliche Leistung angegeben wird. Die Messungen werden in einem Labor bei 23°C/50% Luftfeuchtigkeit durchgeführt. Die Leistungssteuerung des Lasers in den Beispielen erfolgt mittels eines Steuergeräts welches mit der Pulsweitenmodulation (PWM) mit einer Taktfrequenz von 10 kHz arbeitet.

Als Pulvermaterial wird ein Polyamid 12 mit den in Tabelle 1 angegebenen Kenndaten eingesetzt.

**Tabelle 1: Eingesetztes Pulvermaterial**

| | **Wert** | **Einheit** | **Prüfart/Prüfgerät/Prüfparameter** |
|---|---|---|---|
| Polymer | Polyamid 12 | | |
| Schüttdichte | 0,455 | g/cm³ | DIN EN ISO 60 |
| Korngröße d50 | 56 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 38 | µm | Malvern Mastersizer 2000, Parameter siehe Korngröße d50 |
| Korngröße d90 | 79 | µm | Malvern Mastersizer 2000, Parameter siehe Korngröße d50 |
| <10,48µm | 3 | % | Malvern Mastersizer 2000, Parameter siehe Korngröße d50 |
| Fließfähigkeit | 24 | s | DIN EN ISO 6186, Verfahren A, Durchmesser Düsenauslauf 15mm |
| Lösungsviskosität | 1,59 | - | ISO 307, Schott AVS Pro, Lösemittel m-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 7,1 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 139 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

### Beispiel 1 (nicht erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Der Energieeintrag des Lasers beträgt 60 mJ/mm² (Laserleistung 20,6 W, Abstand Belichtungslinien 0,3 mm). Der Laserstrahl wird derart gesteuert, dass die Belichtungslinien gerade Strecken sind, die durch den Rand der zu verfestigenden Fläche begrenzt werden. Die Geschwindigkeit in Richtung der ideal geraden Strecke beträgt 1144 mm/s. Die durchschnittlich benötigte Zeit für das Abfahren der zu belichtenden Fläche beträgt 30,6 Sekunden.

### Beispiel 2 (nicht erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Der Energieeintrag des Lasers beträgt 60 mJ/mm² (Laserleistung 41,2 W, Abstand Belichtungslinien 0,6 mm). Der Laserstrahl wird derart gesteuert, dass die Belichtungslinien gerade Strecken sind, die durch den Rand der zu verfestigenden Fläche begrenzt werden. Die Geschwindigkeit in Richtung der ideal geraden Strecke beträgt 1144 mm/s. Die durchschnittlich benötigte Zeit für das Abfahren der zu belichtenden Fläche beträgt 14,9 Sekunden.

### Beispiel 3 (nicht erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Der Energieeintrag des Lasers beträgt 60 mJ/mm² (Laserleistung 55 W, Abstand Belichtungslinien 0,8 mm). Der Laserstrahl wird derart gesteuert, dass die Belichtungslinien gerade Strecken sind, die durch den Rand der zu verfestigenden Fläche begrenzt werden. Die Geschwindigkeit in Richtung der ideal geraden Strecke beträgt 1144 mm/s. Die durchschnittlich benötigte Zeit für das Abfahren der zu belichtenden Fläche beträgt 11,1 Sekunden.

### Beispiel 4 (nicht erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Der Energieeintrag des Lasers beträgt 60 mJ/mm² (Laserleistung 68,6 W, Abstand Belichtungslinien 1,0 mm). Der Laserstrahl wird derart gesteuert, dass die Belichtungslinien gerade Strecken sind, die durch den Rand der zu verfestigenden Fläche begrenzt werden. Die Geschwindigkeit in Richtung der ideal geraden Strecke beträgt 1144 mm/s. Die durchschnittlich benötigte Zeit für das Abfahren der zu belichtenden Fläche beträgt 8,1 Sekunden.

### Beispiel 5 (erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Der Energieeintrag des Lasers beträgt 60 mJ/mm² (Laserleistung 41,2 W). Der Laserstrahl wird mittels des Scanners derart gesteuert, dass die Belichtungslinien (31) mit einer Amplitude von 0,5 mm und einer Frequenz von 100 Hz um die ideale Strecke (32) geführt werden, welche durch die Ränder des Bauteils begrenzt wird. Die Vorschubgeschwindigkeit des Laserstrahls beträgt 1144 mm/s. Der Abstand der geraden Strecken, um die die Belichtungslinien schwingen, beträgt 0,6 mm. Es wird eine durchschnittliche Zeit von 14,9 Sekunden für das Abfahren der zu belichtenden Fläche benötigt.

### Beispiel 6 (erfindungsgemäß)

Als Laser (CO₂, Wellenlänge 10,6µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Im Strahlengang des Lasers befindet sich zudem ein beweglich gelagertes optisch wirksames Element (19) in Form eines Keilprismas. Das Keilprisma rotiert mit 174 Umdrehungen/s. Der Energieeintrag des Lasers beträgt 60 mJ/mm² (Laserleistung 55 W). Der Laserstrahl wird derart gesteuert, dass die Belichtungslinien (33) in Form einer Zykloiden um die ideal geraden Strecken (34) geführt werden, welche durch die Ränder des Bauteils begrenzt wird. Der Durchmesser des Kreises welcher die Zykloide beschreibt beträgt 2,1 mm. Die Vorschubgeschwindigkeit des Laserstrahls beträgt 1144 mm/s. Der Abstand zwischen den idealen Strecken, um die die Belichtungslinien zykloidenförmig führen, beträgt 0,8 mm. Es wird eine durchschnittliche Zeit von 11,1 Sekunden für das Abfahren der zu belichtenden Fläche benötigt.

### Beispiel 7 (erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Im Strahlengang des Lasers befindet sich zudem ein beweglich gelagertes optisch wirksames Element (19) in Form eines Keilprismas. Das Keilprisma rotiert mit 400 Umdrehungen/s. Der Energieeintrag des Lasers beträgt 60 mJ/mm² (Laserleistung 68,6 W). Der Laserstrahl wird derart gesteuert, dass die Belichtungslinien (33) in Form einer Überlagerung einer Rotationsbewegung mit einer Translationsbewegung um die ideal geraden Strecken (34) geführt werden, welche durch die Ränder des Bauteils begrenzt wird. Der Durchmesser des Kreises welcher die Rotationsbewegung beschreibt beträgt 2,1 mm. Die Vorschubgeschwindigkeit des Laserstrahls beträgt 1144 mm/s. Der Abstand zwischen den idealen Strecken, um die die Belichtungslinien führen, beträgt 1 mm. Die Vorschubgeschwindigkeit des Laserstrahls beträgt 1144 mm/s. Es wird eine durchschnittliche Zeit von 8,1 Sekunden für das Abfahren der zu belichtenden Fläche benötigt.

### Beispiel 8 (erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Im Strahlengang des Lasers befindet sich zudem ein beweglich gelagertes optisch wirksames Element (19) in Form eines Keilprismas. Das Keilprisma rotiert mit 400 Umdrehungen/s. Der Energieeintrag des Lasers beträgt 60 mJ/mm² (Laserleistung 89,2 W). Der Laserstrahl wird derart gesteuert, dass die Belichtungslinien (33) in Form einer Überlagerung einer Rotationsbewegung mit einer Translationsbewegung um die ideal geraden Strecken (34) geführt werden, welche durch die Ränder des Bauteils begrenzt wird. Der Durchmesser des Kreises welcher die Rotationsbewegung beschreibt beträgt 2,1 mm. Die Vorschubgeschwindigkeit des Laserstrahls beträgt 1144 mm/s. Der Abstand zwischen den idealen Strecken, um die die Belichtungslinien führen, beträgt 1,3 mm. Die Vorschubgeschwindigkeit des Laserstrahls beträgt 1144 mm/s. Es wird eine durchschnittliche Zeit von 6,2 Sekunden für das Abfahren der zu belichtenden Fläche benötigt.

In der Tabelle 2 sind die mechanischen Kennwerte der Bauteile aus den einzelnen Beispielen zusammengefasst.

**Tabelle 2**

| Beispiel | E-Modul [MPa] | Zugestigkeit [MPa] | Reißdehnung [MPa] | Benötigte Belichtungszeit [s] | Abstand Belichtungslinien [mm] |
|---|---|---|---|---|---|
| 1 | 1725 | 45,4 | 19,2 | 30,6 | 0,3 |
| 2 | 1732 | 44,2 | 12,3 | 14,9 | 0,6 |
| 3 | 1653 | 39,3 | 8,4 | 11,1 | 0,8 |
| 4 | 1627 | 22,6 | 2,7 | 8,1 | 1 |
| 5 | 1692 | 45,6 | 18,8 | 14,9 | 0,6 |
| 6 | 1713 | 45,5 | 19,3 | 11,1 | 0,8 |
| 7 | 1695 | 45,4 | 18,7 | 8,1 | 1,0 |
| 8 | 1704 | 45,7 | 18,8 | 6,2 | 1,3 |

Wenn die Belichtungslinien, wie in den erfindungsgemäßen Beispielen 5-8, als nichtlineare Stecken ausgeführt werden, können bei gleichem Laserenergieeintrag die Abstände zwischen den Belichtungslinien erhöht werden, ohne Einbußen bei den mechanischen Kennwerten hinnehmen zu müssen. Somit kann auch die Belichtungszeit ohne Einbußen in der Bauteilmechanik in den erfindungsgemäßen Beispielen reduziert werden.

## Patentansprüche

1. Verfahren zur schichtweisen Herstellung von dreidimensionalen Objekten in einer Vorrichtung umfassend einen Bauraum (10) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und einem im Strahlengang der elektromagnetischen Strahlung befindlichen Linsensystem (8), wobei die Schicht eines durch Einwirkung elektromagnetischer Strahlung verfestigbaren Materials nichtlinear von der elektromagnetischen Strahlung abgefahren wird.

2. Verfahren gemäß Anspruch 1, **dadurch gekennzeichnet, dass** die Schicht eines durch Einwirkung elektromagnetischer Strahlung verfestigbaren Materials durch Bewegung mit zwei Bewegungskomponenten in der Bewegungsebene von der elektromagnetischen Strahlung abgefahren wird.

3. Verfahren nach Anspruch 1 oder 2, **dadurch gekennzeichnet, dass** die Schicht eines durch Einwirkung elektromagnetischer Strahlung verfestigbaren Materials in Form einer periodischen Schwingung von der elektromagnetischen Strahlung abgefahren wird.

4. Verfahren nach Anspruch 1, **dadurch gekennzeichnet, dass** die Schicht eines durch Einwirkung elektromagnetischer Strahlung verfestigbaren Materials in Form einer Überlagerung einer Rotationsbewegung mit einer Translationsbewegung von der elektromagnetischen Strahlung abgefahren wird.

5. Dreidimensionale Objekte, hergestellt nach einem Verfahren gemäß einem oder mehreren der Ansprüche 1 bis 4.

6. Vorrichtung zur schichtweisen Herstellung von dreidimensionalen Objekten umfassend einen Bauraum (22) mit einer höheneinstellbaren Bauplattform (25), einer Vorrichtung (23) zum Aufbringen einer Schicht eines durch Einwirkung elektromagnetischer Strahlung verfestigbaren Materials auf die Bauplattform (25), einer Bestrahlungseinrichtung umfassend eine elektromagnetische Strahlung emittierende Strahlungsquelle (17), eine Steuerungseinheit (20) und eine im Strahlengang der elektromagnetischen Strahlung befindliches Linsensystem (21 ), zum Bestrahlen von dem Objekt (26) entsprechenden Stellen der Schicht, **dadurch gekennzeichnet, dass** die Vorrichtung ein beweglich gelagertes optisch wirksames Element (19) im Strahlengang aufweist, welches den elektomagnetischen Energiestrahl umlenkt.

7. Vorrichtung nach Anspruch 6, **dadurch gekennzeichnet, dass** das optisch wirksame Element ein beweglich gelagertes Keilprisma ist.
